# EUROPEAN PATENT SPECIFICATION

(11) **EP 3 046 170 B1**
(45) Date of publication and mention of the grant of the patent: **07.11.2018**
(21) Application number: 14844027.4
(22) Date of filing: 03.09.2014
(51) Int. Cl.: H01M 4/58, H01M 4/136, H01M 4/40, H01M 4/48, H01M 4/587, H01M 4/62, H01M 10/054

(54) **POSITIVE ELECTRODE MATERIAL FOR SODIUM ION SECONDARY BATTERIES**
POSITIVELEKTRODENMATERIAL FÜR NATRIUMIONENSEKUNDÄRBATTERIEN
MATÉRIAU D'ÉLECTRODE POSITIVE POUR BATTERIES SECONDAIRES AU SODIUM-ION

(30) Priority: 11.09.2013 JP 2013187914; 19.03.2014 JP 2014055748; 12.05.2014 JP 2014098660
(43) Date of publication of application: 20.07.2016
(73) Proprietor: The University of Tokyo, Tokyo 113-8654 (JP)
(72) Inventor: YAMADA Atsuo, Tokyo 113-8654 (JP); BARPANDA, Prabeer, Tokyo 113-8654 (JP); OYAMA Gosuke, Tokyo 113-8654 (JP); NISHIMURA Shin-ichi, Tokyo 113-8654 (JP)
(74) Representative: Grünecker Patent- und Rechtsanwälte PartG mbB
(86) International application number: PCT/JP2014/073162
(87) International publication number: WO 2015/037489

(56) References cited:
- EP-A1- 0 743 692
- WO-A1-2012/032956
- WO-A1-2013/128115
- JP-A- 2009 266 821
- JP-A- 2012 506 360
- US-A- 5 908 716
- PRABEER BARPANDA ET AL.: 'A 3.8-V earth-abundant sodium battery electrode' NATURE COMMUNICATIONS vol. 5, 17 July 2014, page 5:4358, XP055325779

## Description

### TECHNICAL FIELD

The present invention relates to a positive electrode material for a sodium ion secondary battery that has high redox potential, and a sodium ion secondary battery in which that material is used as a positive electrode active material.

### BACKGROUND ART

Lithium ion secondary batteries have conventionally been used as main electrical storage devices in various fields including mobile telephones, notebook PCs, and electric automobiles, but secondary batteries that can be manufactured at lower cost have recently come to be in demand. There has accordingly been a proliferation of studies on next-generation secondary batteries having high energy densities that exceed those of lithium ion secondary batteries, and various attempts have been made. Sodium ion secondary batteries, which constitute one such attempt, use sodium, which is an abundant resource that is less expensive than lithium; therefore, the cost can be brought dramatically lower than that of lithium ion secondary batteries, and application in particular to large-scale electrical devices and other uses is expected.

However, the energy density of sodium ion secondary batteries is no greater than that of lithium ion secondary batteries, and increase their level of performance, a demand to develop a new positive electrode active material having high redox potential has arisen. A positive electrode active material for a sodium ion secondary battery must be a supply source of sodium ions, and must be a compound that includes sodium as a constituent element. Composite oxides indicated by the compositional formula NaMO₂ (M: transition metal element) have been examined to date as such positive electrode active materials (for example, Patent Reference 1), but adequate performance for practice has yet to be obtained. For example, a problem has been presented in that when Fe is used as the transition metal M, the reversible capacitance was small, and the redox potential was low; i.e., 2.5 to 3.0 V, when Mn was introduced for stabilization.

### PRIOR ART REFERENCES

### PATENT REFERENCES

Patent Reference 1: Japanese Laid-Open Patent Application 2009-129741

### SUMMARY OF THE INVENTION

### PROBLEMS TO BE SOLVED BY THE INVENTION

Therefore, an object of the present invention is to provide a novel positive electrode material for sodium ion secondary battery that is inexpensive and has high redox potential, and a sodium ion secondary battery in which that material is used as a positive electrode active material.

### MEANS USED TO SOLVE THE ABOVE-MENTIONED PROBLEMS

The present inventors carried out thoroughgoing studies in order to achieve the above object, and newly discovered as a result that a sulfate containing sodium and a transition metal in a proper ratio as constituent elements is usable for a positive electrode active material, and that high redox potential is obtained and rapid charging and discharging can be adequately accommodated by using the material, and that discovery led to the completion of the present invention.

That is, the present invention provides in one aspect:
(1) a positive electrode active material for a sodium ion secondary battery, characterized by containing a sulfate represented by NaₘMₙ(SO₄)₃ (wherein, M represents a transition metal element: m is 2 ± 2x (where x satisfies 0 ≤ x < 0.5); and n is 2 ± y (where y satisfies 0 ≤ y < 0.5);
(2) the positive electrode active material for a sodium ion secondary battery according to (1) above, wherein m is 2 + 2x (where x satisfies 0 ≤ x < 0.5); and n is 2 - y (where y y < 0.5); satisfies 0 ≤
(3) the positive electrode active material for a sodium ion secondary battery according to (1) or (2) above, wherein said sulfate has a crystal structure in which MO₆ forms octahedra and has mutually shared ridge lines;
(4) the positive electrode active material for a sodium ion secondary battery according to any of (1) to (3) above, wherein said transition metal element is a period 4 transition metal element selected from the group consisting of Sc, T, V, Cr, Mn, Fe, Co, Ni, and Cu, or a period 5 transition metal element selected from the group consisting of Y, Zr, Nb, Mo, Tc, Ru, Rh, and Pd;
(5) the positive electrode active material for a sodium ion secondary battery according to (4) above, wherein said transition metal element is Fe; and
(6) the positive electrode active material for a sodium ion secondary battery according to any of (1) to (5) above, wherein said sulfate is a particle having a diameter of 5 µm or smaller.

In another aspect, the present invention provides:
(7) a sodium ion secondary battery comprising a positive electrode containing the positive electrode active material according to any of (1) to (6) above, and a negative electrode containing a negative electrode active material capable of storing and releasing sodium ions;
(8) the sodium ion secondary battery according to (7) above, wherein said positive electrode further contains an electroconductive material or a binder;
(9) the sodium ion secondary battery according to (8) above, wherein said positive electrode active material is covered by said electroconductive material;
(10) the sodium ion secondary battery according to (8) or (9) above, wherein said electroconductive material is a carbon material selected from the group consisting of graphite, soft carbon, hard carbon, carbon black, ketjen black, acetylene black, graphite, activated carbon, carbon nanotubes, carbon fiber, and mesoporous carbon;
(11) the sodium ion secondary battery according to (8) above, wherein said binder is a thermoplastic resin selected from the group consisting of polyvinylidene fluoride (PVDF), polytetrafluoroethylene (PTFE), ethylene tetrafluoroethylene (ETFE), polyvinyl acetate, polyamide (PA), polyimide (PI), polyethylene, and polypropylene; and
(12) the sodium ion secondary battery according to any of (7) to (11) above, wherein said negative electrode active material is a carbon material, metal sodium, sodium alloy, or sodium metal oxide.

### ADVANTAGEOUS EFFECTS OF THE INVENTION

According to the present invention, there can be constructed a positive electrode for sodium ion secondary battery that has high redox potential and can also accommodate rapid charging and discharging. That redox potential could not be obtained with conventional positive electrode materials using transition metal elements. In particular, the positive electrode material of the present invention is different from the nasicon-type M₂(SO₄)₃, being a conventional positive electrode material, in that the material of the present invention contains sodium ions in its structure, and therefore there is an advantage that the material can serve the function of a supply source of sodium ions when a material other than Na metal is used in the negative electrode. The material of the present invention differs from the nasicon-type M₂(SO₄)₃ also in crystal structure, in that the degree of freedom of movement of sodium ions in the crystal is improved by a crystal structure, that is, an alluaudite-type crystal structure, in which two MO₆ units in the structure share ridge lines to form a dimer, and as a result the distance between M metals decreases and a higher redox potential than of nasicon-type is obtained.

Furthermore, the positive electrode active material of the present invention can be produced by low-temperature synthesis from inexpensive sulfates, and therefore production at low cost with little energy consumption is possible. In particular, low cost and high environmental harmony can be assured when Fe is used as the transition metal element. Accordingly, the present invention provides a positive electrode active material that has high density combining low cost and environmental harmony and can also accommodate rapid charging and discharging, and the invention is extremely useful in making sodium ion secondary batteries practical.

### BRIEF DESCRIPTION OF THE DRAWINGS

[FIG. 1] FIG. 1 is a graph showing the X-ray diffraction pattern of the sulfate compound 1 of the present invention.
[FIG. 2] FIG. 2 is a graph showing the X-ray diffraction pattern of the sulfate compound 2 of the present invention.
[FIG. 3] FIG. 2 is a graph showing the X-ray diffraction patterns of various compounds having different m:n ratios in the sulfate compound NaₘFeₙ(SO₄)₃ of the present invention.
[FIG. 4] FIG. 4 is a graph comparing the charge-discharge curves when the sulfate compounds 1 and 2 of the present invention were used as positive electrode active materials.
[FIG. 5] FIG. 5 is a graph showing the charge-discharge curves in 1 to 5 cycles when the sulfate compound 1 of the present invention was used as a positive electrode active material.
[FIG. 6] FIG. 6 is a graph showing a comparison of rate characteristics when the sulfate compound 1 of the present invention was used as a positive electrode active material.
[FIG. 7] FIG. 7 is a graph showing the dQ/dV curves when the sulfate compounds 1 and 2 of the present invention were used as positive electrode active materials.

### EMBODIMENTS FOR CARRYING OUT THE INVENTION

Embodiments of the present invention are described below.

### 1. Positive electrode

### (1) Active material

The positive electrode active material for a sodium ion secondary battery according to the present invention is characterized by containing a sulfate that contains sodium and a transition metal as constituent elements and is represented by the compositional formula NaₘMₙ(SO₄)₃.

In the formula, M represents a transition metal element: m is 2 ± 2x (where x satisfies 0 ≤ x < 0.5): and n is 2 ± y (where x satisfies 0 ≤ y < 0.5). Accordingly, the ratio of sodium:transition metal M: (SO₄) in the sulfate is proximal to 2:2:3, that is, (2 ± 2x) : (2 ± y) :3 (accordingly, this becomes 2:2:3 when x = y = 0).

The positive electrode active material is a single-electron reaction material that is in principle capable of insertion and removal of one equivalent amount of sodium ions, as indicated by the reaction formula:

2Na + 2e⁻ + M₂ (SO₄)₃ ⇔ Na₂M₂ (SO₄)₃

Here, it is believed that a very high redox potential can be obtained by a dielectric effect in which the M-O bond is endowed with an ion-binding property by the strong covalent bond of the S-O bond in "SO₄."

The sulfate of compositional formula NaₘMₙ (SO₄)₃ used in the present invention is characterized by a crystal structure, an "alluaudite-type crystal structure," in which two MO₆ units in the structure share ridge line to form a dimer. By containing such alluaudite-type crystal structure, the crystal structure is greatly different from the conventional nasicon-type M₂(SO₄)₃, in which MO₆ octahedra and SO₄ tetrahedra are arranged three-dimensionally with vertex sharing. In the sulfate used in the present invention, the degree of freedom of movement of sodium ions in the crystal is improved by the alluaudite-type crystal structure forming a dimer as above, and a higher redox potential than that of nasicon-type salt is exhibited by shortening of the distance between M units (when Me is Fe, the distance between Fe-Fe becomes 3.2 Å).

In the above formula, M is a transition metal element, preferably a period 4 transition metal element selected from the group consisting of Sc, T, V, Cr, Mn, Fe, Co, Ni, and Cu, or a period 5 transition metal element selected from the group consisting of Y, Zr, Nb, Mo, Tc, Ru, Rh, and Pd. M is more preferably Fe (iron), for reasons including that iron is inexpensive and easy to acquire and also that iron has a small environmental load. Ag of period 5 also can be used as a dopant with the metal M.

In the above compositional formula, M is 2 ± 2x and n is 2 ± y. Preferably, there is possible an embodiment in which there is a great composition of sodium (Na-rich), that is, m is 2 + 2x and n is 2 - y. Alternatively, there is possible an embodiment in which there is a great composition of transition metal (M-rich), that is, m is 2 - 2x and n is 2 + y.

x can be an optional decimal number of 0.5 lower than, specifically, 0 ≤ x < 0.5. Preferably, 0 ≤ x ≤ 0.3.

y can be an optional decimal number of 0.5 lower than, specifically, 0 ≤ y < 0.5. Preferably, 0 ≤ y ≤ 0.3.

The NaₘMₙ(SO₄)₃ can be produced by a solid phase method, which is a well-known means in the technical field. In the solid phase method, the object material is synthesized by mixing powder-form raw materials in a predetermined ratio and then subjecting to heating treatment. In the present invention, for example, the object material can be synthesized by mixing Na₇SO₄ and MSO₄ as raw materials in a proper ratio and subjecting to thermal treatment. Alternatively , depending on the case, the object material can be produced also by mixing these raw materials using a ball mill, or the like, without heating.

The NaₘMₙ(SO₄)₃ used as the positive electrode active material of the present invention can be in particle form, and the particle size thereof is preferably a diameter of 5 µm or smaller, more preferably a diameter of 2 µm or smaller.

### (2) Positive electrode configuration

The positive electrode used in the sodium ion secondary battery of the present invention is configured using the above positive electrode active material, and may contain only that active material, and may additionally contain at least one of a well-known electroconductive material and a binder in order to improve the rate characteristics of the electrode, and the like. These contents can be supported on an electrode collector to produce the electrode.

Examples of electroconductive materials that can be used include carbon materials, metal fibers and other electrically conductive fibers, copper, silver, nickel, aluminum, and other metal powders, and polyphenylene derivatives and other organic electroconductive materials. Carbon materials that can be used include graphite, soft carbon, hard carbon, carbon black, ketjen black, acetylene black, graphite, activated carbon, carbon nanotubes, and carbon fiber. Also usable material is mesoporous carbon obtained by calcining synthetic resin having aromatic rings, petroleum pitch, or the like. Acetylene black is preferred from the viewpoint of the height of electrical conductivity during use as an electrode.

When the electrode is to contain an electroconductive material, the electrode can be prepared by pulverizing and mixing this material with the positive electrode active material. Such pulverizing and mixing are not particularly limited, but these can be performed by vibration mill, jet mill, ball mill, or other pulverizing machine.

Also, in a preferred embodiment, when an electroconductive material is to be contained in the positive electrode, the positive electrode active material can be covered by the electroconductive material. A method for such covering is a method in which a powder of the positive electrode active material is immersed in a liquid containing the electroconductive material or a precursor of the electroconductive material, and this is then subjected to thermal treatment whereby the electroconductive material is deposited on the powder surface of the active material. Or, a method can be used, in which a powder of the positive electrode active material is mobilized in a vapor phase containing the electroconductive material or a precursor of the electroconductive material, and is then subjected to thermal treatment as needed. By covering the positive electrode active material with the electroconductive material, any reduction in capacity when large current is applied will be minimized, which is beneficial in increasing load characteristics.

Electroconductive materials that can be used for the covering include carbon, graphite, vapor-phase-deposited carbon fiber, carbon nanotubes, iron phosphide, electrically conductive oxides, and electrically conductive polymers (polypyrrole, polyacrylonitrile, and the like), but are not limited to these.

Examples of binders include polyvinylidene fluoride (PVDF), polytetrafluoroethylene (PTFE), ethylene tetrafluoroethylene (ETFE), and other fluororesins, or polyethylene, polypropylene, and the like. The negative electrode collector is not particularly limited provided that the material is electrically conductive, but rod-form, sheetform, foil-form, net-form, and other materials consisting mainly of copper, nickel, aluminum, stainless steel, and the like, can be used.

Al, Ni, Cu, stainless steel, or the like, can be used as the electrode collector. Methods for supporting the electrode mixture on the electrode collector include a method of molding under pressure, or a method of forming a paste using an organic solvent, or the like, applying on the electrode collector, and fixing by drying and pressing, or the like. When forming a paste, a slurry containing the electrode active material, electroconductive material, binder, and organic solvent is prepared.

### 2. Negative electrode

Negative electrodes that can be used in the sodium ion secondary battery of the present invention include electrodes containing a negative electrode active material capable of storing and releasing sodium ions electrochemically. Such negative electrode active material can be a well-known negative electrode active material for sodium ion secondary batteries, examples including hard carbon, soft carbon, carbon black, ketjen black, acetylene black, activated carbon, carbon nanotubes, carbon fiber, amorphous carbon, and other carbon materials. Also usable are sodium ion metals, or alloys, metal oxides, and metal nitrides containing a sodium ion element.

Of these, hard carbon or another carbon material having a disordered structure is preferred as the negative electrode active material.

The negative electrode may contain only the negative electrode active material, and may contain at least one of an electroconductive material and a binder in addition to the negative electrode active material, and may be in a form in which the contents are adhered as a negative electrode mixture on a negative electrode collector. For example, when the negative electrode active material is in oil form, a negative electrode containing only the negative electrode active material can be made. Meanwhile, when the negative electrode active material is in powder form, a negative electrode having the negative electrode active material and a binder can be made. The method used for forming the negative electrode using a powder-form negative electrode active material can be a doctor blade method, molding by crimping press, or the like.

The electroconductive material, binder, and electrode collector used can be the same as those for the positive electrode described above.

### 3. Electrolytic solution

The electrolytic solution used in the sodium ion secondary battery of the present invention is not particularly limited provided that the solution contains a sodium salt as an electrolyte. Examples of sodium salts containing this electrolyte include NaClO₄, NaPF₆, NaBF₄, NaNO₃, NaOH, NaCl, NaCF₃SO₃, NaN(SO₂CF₃)₂, Na₂SO₄, and Na₂S. These sodium salts can be used each singly, but can also be used in combinations of two or more.

Examples of solvents in the electrolytic solutions include propylene carbonate (PC), ethylene carbonate (EC), dimethyl carbonate (DMC), diethyl carbonate (DEC), ethyl methyl carbonate, 4-trifluoromethyl-1,3-dioxolan-2-one, 1,2-di(methoxycarbonyloxy)ethane, and other carbonates; 1,2-dimethoxyethane, 1,3-dimethoxypropane, pentafluoropropyl methyl ether, 2,2,3,3-tetrafluoropropyl drifluoromethyl ether, tetrahydrofuran, 2-methyl tetrahydrofuran, and other ethers; methyl formate, methyl acetate, γ-butyrolactone, and other esters; acetonitrile, butyronitrile, and other nitriles; N,N-dimethylformamide, N,N-dimethylacetoamide, and other amides; 3-methyl-2-oxazolidone and other carbamates; sulfolane, dimethyl sulfoxide, 1,3-propanesultone, and other sulfur-containing compounds; or solvents in which fluorine substituents are introduced in the above organic solvents. On kind of these may be used singly, and two or more kinds may be used in combination. However, the solvents are not limited to these.

A solid electrolyte can be used instead of the electrolytic solution. Examples of solid electrolytes include polyethylene oxide-based polymer compounds, polymer compounds containing at least one kind of polyorganosiloxane chain or polyoxyalkylene chain, and other polymer electrolytes. Also usable is an electrolyte in the form of a non-aqueous solution obtained by adding a polymer to the above electrolytic solution and gelling. When a solid electrolyte is used in the sodium ion secondary battery of the present invention, the solid electrolyte may serve the function of a separator to be described, and a separator may not be required in that case.

Also, the electrolytic solution can contain other ingredients as needed for the purpose of improving the function thereof. Examples of other ingredients include conventionally well-known overcharge inhibitors, dehydrating agents, deoxidizing agents, and characteristics improvement aids for improving capacity retention characteristics after high-temperature storage or cycle characteristics.

Examples of overcharge inhibitors include biphenyl, alkylbiphenyl, terphenyl, partially hydrogenated terphenyl, cyclohexylbenzene, t-butylbenzene, t-amylbenzene, diphenyl ether, dibenzofuran, and other aromatic compounds; 2-fluorobiphenyl, o-cyclohexyl fluorobenzene, p-cyclohexyl fluorobenzene, and other partial fluorides of aromatic compounds; and 2,4-difluoroanisol, 2,5-difluoroanisol, 2,6-difluoroanisol, and other fluoride-containing anisol compounds. One kind of overcharge inhibitor may be used singly, and two or more kinds may be used together.

When the electrolytic solution contains an overcharge inhibitor, the overcharge inhibitor content of the electrolytic solution is preferably 0.01 to 5 mass%. By having the overcharge inhibitor content of the electrolytic solution be 0.1 mass% or higher, suppression of bursting and igniting of the secondary battery by overcharging becomes easier, and the secondary battery can be used more stably.

Examples of dehydrating agents include molecular sieves, mirabilite, magnesium sulfate, calcium hydride, sodium hydride, potassium hydride, and lithium aluminum hydride. The solvent used in the electrolytic solution of the present invention can also be refined after being dehydrated with the aforementioned dehydrating agent. Also, a solvent subjected only to dehydration by the aforementioned dehydrating agent without being refined may be used.

Examples of a characteristics improvement aid for improving capacity retention characteristics after high-temperature storage or cycle characteristics include succinic anhydride, glutaric anhydride, maleic anhydride, citraconic anhydride, glutaconic anhydride, itaconic anhydride, diglycolic anhydride, cyclohexane dicarboxylic anhydride, cyclopentane tetracarboxylic dianhydride, phenylsuccinic anhydride, and other carboxylic anhydrides; ethylene sulfite, 1,3-propanesultone, 1,4-butanesultone, methyl methanesulfonate, busulfan, sulfolane, sulfolene, dimethyl sulfone, diphenyl sulfone, methylphenyl sulfone, dibutyl disulfide, dicyclohexyl disulfide, tetramethylthiuram monosulfide, N,N-dimethyl methanesulfamide, N,N-diethyl methanesulfamide, and other sulfur-containing compounds; 1-methyl-2-pyrrolydinone, 1-methyl-2-piperidone, 3-methyl-2-oxazolidinone, 1,3-dimethyl-2-imidazolidinone, N-methylsuccimide, and other nitrogen-containing compounds; heptane, octane, cyclopentane, and other hydrocarbon compounds; and fluoroethylene carbonate (FEC), fluorobenzene, difluorobenzene, hexafluorobenzene, benzotrifluoride, and other fluorine-containing aromatic compounds. One kind of these characteristics improvement aids may be used singly, and two or more kinds may be used together. When the electrolytic solution contains a characteristics improvement aid, the content of the characteristics improvement aid in the electrolytic solution is preferably 0.01 to 5 mass%.

### 4. Other components

### (1) Separator

The separator used in the sodium ion secondary battery of the present invention is not particularly limited provided that the separator has a function of electrically separating the positive electrode layer and the negative electrode layer, but examples include porous sheets, nonwoven cloths, glass fiber nonwoven cloths, other nonwoven cloths, and other porous insulating materials containing polyethylene (PE), polypropylene (PP), polyester, cellulose, polyamide, or other resins.

### (2) Shape, etc.

The shape of the sodium ion secondary battery of the present invention is not particularly limited provided that the positive electrode, negative electrode, and electrolytic solution can be housed; e.g., cylindrical, coin, flat plate, and laminated configurations may be adopted.

The sodium ion secondary battery of the present invention is ideal for use as a secondary battery, but use as a primary battery is not excluded.

### EXAMPLES

The present invention is described in further detail below using examples, but the present invention is not limited to these examples.

### EXAMPLE 1

### 1. Synthesis of positive electrode active material

A mixture of Na₂SO₄ (Wako Pure Chemical Industries, 99%) and FeSO₄ in a molar ratio of 1.3:2 as a starting material was reacted according to the procedure below, and a sulfate NaₘFeₙ(SO₄)₃ (hereinafter referred to as "sulfate compound 1"), being an object material, was synthesized. Commercial FeSO₄·7H₂O was heated for 5 hours at 180°C under reduced pressure, and further heated for 5 hours at 225°C, and anhydrous FeSO₄ was obtained. This raw material mixture was mixed for 1 hr with a ball mill, and then fired for 12 hours at 350°C under a steady stream of argon, and a sulfate compound 1 was obtained by solid phase synthesis. Also, it was confirmed that the object material is also obtained merely by mixing the raw material mixture for 1 to 4 hours in air with a ball mill instead of the above method. Because a SO₄-containing compound generally tends to be easily pyrolyzed, use of the latter non-heating synthesis method is advantageous. A sulfate being an object material (hereinafter referred to as "sulfate compound 2") was synthesized by the same method with a molar ratio of 1.2:2 in the Na₂SO₄/FeSO₄ mixture. Also, sulfates were likewise synthesized, changing the molar ratios of Na₂SO₄ and FeSO₄ (m:n) to 2:2, 2.2:1.9, 2.4:1.8, 2.5:1.75, 2.6:1.7, and 2.8:1.6, respectively. Fe was changed to other metals, and Na₂CO₂ (SO₄)₃ and Na₂Mn₂ (SO₄)₃ were obtained.

FIG. 1 and FIG. 2 show the results of powder X-ray diffractometry (XRD) of the obtained sulfate compounds 1 and 2, respectively. An RINT-TTR III (Rigaku) was used to obtain measurements, and CuKα radiation (λ = 1.54 Å) was used as the X-ray source. The peaks in the graphs of FIG. 1 and FIG. 2 were returned as diffraction peaks indicating the composition of the sulfate compound.

Also, FIG. 3 shows the results of measurement of XRD of sulfates obtained further changing the molar ratios of the mixtures of Na₂SO₄ and FeSO₄ so that m:n ranged from 2:2 to 2.8:1.6 as above. Formation of sulfate compounds was confirmed by the peaks in FIG. 3.

80 wt% of the sulfate compound 1 or 2 as active material, 10 wt% of carbon black (ketjen black, Lion Corporation, ECP) as electroconductive material, and 10 wt% of polytetrafluoroethylene (PTFE) as a binder were mixed in a mortar, and electrodes were created. These were crimped on top of A1 mesh as a collector and were used as electrodes.

### EXAMPLE 2

### 2. Electrochemical measurement

A beaker-type three-electrode cell using the positive electrode film created in example 1 for the active electrode and metal sodium for a counter electrode and a reference electrode was created in an argon-filled glove box, and the cell was subjected to constant-current charge-discharge cycle measurement. The electrolytic solution used was propylene carbonate (PC) containing 1 M NaClO₄ as electrolyte (without additives). The voltage range was 1.5 to 4.2 V, C/10 rate, and the measurement temperature was 25°C.

The charge-discharge curve (chronopotentiometry) obtained at a C/10 rate using the sulfate compound 1 as the positive electrode active material is indicated by the broken line in FIG. 4. As a result, a discharge capacity of 90 mAh/g or higher, being equivalent to about 75% of the theoretical capacity of 120.24 mAh/g was confirmed. The results when using the sulfate compound 2 as the positive electrode active material likewise are indicated by the solid line in FIG. 4. A discharge capacity of 100 mAh/g or higher, being equivalent to about 83% of the theoretical capacity of 120.24 mAh/g was confirmed.

Because a gentle voltage slope is observed in a range 4.2 V to 3.5 V in both sulfate compounds 1 and 2, it is believed that a single-phase solid solution-type reaction marked by comparatively little change of volume accompanying charging and discharging and by little degradation of capacity accompanying cycling was progressing. FIG. 5 shows the results of having actually measured the charge-discharge curves in five cycles with respect to the sulfate compound 1. As a result, because the curves are nearly the same after two cycles, very reversible charging and discharging without degradation of cycling was confirmed. Also, because there was little hysteresis of the curves during charging and discharging and there was almost no irreversible capacity, it was confirmed that there was very high charging and discharging efficiency.

Also, FIG. 6 shows the results of having measured the discharge capacity at various rates in a range of 1/20 C to 20 C with respect to the sulfate compound 1 (in order to confirm reversibility, the measurement has been performed again at 1/20 C after cycle of 22). From the results in the drawings, it was confirmed that an adequate value of discharge capacity was maintained without so much decrease even when the rate became high, and that nearly the same discharge capacity as at the start was maintained even when the rate was returned again to 1/20 C. This shows that the positive electrode having the sulfate compound 1 can function adequately even under rapid charging and discharging conditions of several minutes or lower.

FIG. 7 shows a dQ/dV curve converted on the basis of the amount of change of voltage in the charge-discharge curve in FIG. 4. From FIG. 7, it was confirmed that the redox potential when having used the sulfate compound 1 was about 3.6 V. Likewise, it was confirmed that the redox potential when having used the sulfate compound 2 was about 3.75 V. That redox potential is significantly higher than existing positive electrode materials using transition metals, and is the highest potential generation in the group of positive electrode active materials using iron as the core transition for the sodium ion battery, an energy density equal to or higher than that of lithium ion batteries was ensured, as was interchangeability. In addition, it was shown that the battery reaction progresses at an extremely high speed, and rapid charging and discharging in several minutes or lower is accommodated. These results prove that reversible charging and discharging and high redox potential are obtained by the positive electrode active material of the present invention, described in detail herein above for illustrative purposes.

## Claims

1. A positive electrode active material for a sodium ion secondary battery, **characterized by** containing a sulfate represented by:
NaₘMₙ(S0₄)₃
(wherein M represents a transition metal element; m is 2 ± 2x (where x satisfies 0 ≤ x< 0.5); and n is 2 ± y (where y satisfies 0 ≤ y < 0.5).

2. The positive electrode active material for a sodium ion secondary battery according to claim 1, wherein m is 2 + 2x (where x satisfies 0 ≤ x < 0.5); and n is 2 - y (where y satisfies 0 ≤ y < 0.5).

3. The positive electrode active material for a sodium ion secondary battery according to claim 1 or 2, wherein said sulfate has a crystal structure in which MO₆ forms octahedra and has mutually shared ridge lines.

4. The positive electrode active material for a sodium ion secondary battery according to any of claims 1 to 3, wherein said transition metal element is a period 4 transition metal element selected from the group consisting of Sc, T, V, Cr, Mn, Fe, Co, Ni, and Cu, or a period 5 transition metal element selected from the group consisting of Y, Zr, Nb, Mo, Tc, Ru, Rh, and Pd.

5. The positive electrode active material for a sodium ion secondary battery according to claim 4, wherein said transition metal element is Fe.

6. The positive electrode active material for a sodium ion secondary battery according to any of claims 1 to 5, wherein said sulfate is a particle having a diameter of 5 µm or smaller.

7. A sodium ion secondary battery comprising a positive electrode containing the positive electrode active material according to any of claims 1 to 6, and a negative electrode containing a negative electrode active material capable of storing and releasing sodium ions.

8. The sodium ion secondary battery according to claim 7, wherein said positive electrode further contains an electroconductive material or a binder.

9. The sodium ion secondary battery according to claim 8, wherein said positive electrode active material is covered by said electroconductive material.

10. The sodium ion secondary battery according to claim 8 or 9, wherein said electroconductive material is a carbon material selected from the group consisting of graphite, soft carbon, hard carbon, carbon black, ketjen black, acetylene black, graphite, activated carbon, carbon nanotubes, carbon fiber, and mesoporous carbon.

11. The sodium ion secondary battery according to claim 8, wherein said binder is a thermoplastic resin selected from the group consisting of polyvinylidene fluoride (PVDF), polytetrafluoroethylene (PTFE), ethylene tetrafluoroethylene (ETFE), polyvinyl acetate, polyamide (PA), polyimide (PI), polyethylene, and polypropylene.

12. The sodium ion secondary battery according to any of claims 7 to 11, wherein said negative electrode active material is a carbon material, metallic sodium, sodium alloy, or sodium metal oxide.

## Patentansprüche

1. Positives Elektrodenaktivmaterial für eine Natriumionen-Sekundärbatterie, **dadurch gekennzeichnet, dass** es ein Sulfat enthält, das dargestellt wird durch:
NaₘMₙ(S0₄)₃
(worin M ein Übergangsmetallelement darstellt; m 2 ± 2x ist (wobei x 0 ≤ x < 0,5 erfüllt ist); und n 2 ± y ist (wobei y 0 ≤ y < 0,5 erfüllt ist).

2. Positives Elektrodenaktivmaterial für eine Natriumionen-Sekundärbatterie nach Anspruch 1, wobei m 2 + 2 ist (wobei x 0 ≤ x < 0,5 erfüllt); und n 2 - y ist (wobei y 0 ≤ y < 0,5 erfüllt ist).

3. Positives Elektrodenaktivmaterial für eine Natriumionen-Sekundärbatterie nach Anspruch 1 oder 2, wobei das Sulfat eine Kristallstruktur aufweist, in der MO₆ Oktaeder bildet und gemeinsame Kammlinien aufweist.

4. Positives Elektrodenaktivmaterial für eine Natriumionen-Sekundärbatterie nach einem der Ansprüche 1 bis 3, wobei das Übergangsmetallelement ein Übergangsmetallelement der Periode 4 ist, ausgewählt aus der Gruppe bestehend aus Sc, T, V, Cr, Mn, Fe, Co, Ni und Cu oder ein Übergangsmetallelement der Periode 5, ausgewählt aus der Gruppe bestehend aus Y, Zr, Nb, Mo, Tc, Ru, Rh und Pd.

5. Positives Elektrodenaktivmaterial für eine Natriumionen-Sekundärbatterie nach Anspruch 4, wobei das Übergangsmetallelement Fe ist.

6. Positives Elektrodenaktivmaterial für eine Natriumionen-Sekundärbatterie nach einem der Ansprüche 1 bis 5, wobei das Sulfat ein Teilchen mit einem Durchmesser von 5 µm oder weniger ist.

7. Natriumionen-Sekundärbatterie, umfassend eine positive Elektrode, die das positive Elektrodenaktivmaterial nach einem der Ansprüche 1 bis 6 enthält, und eine negative Elektrode, die ein negatives Elektrodenaktivmaterial enthält, das Natriumionen speichern und freisetzen kann.

8. Natriumionen-Sekundärbatterie nach Anspruch 7, wobei die positive Elektrode ferner ein elektrisch leitendes Material oder ein Bindemittel enthält.

9. Natriumionen-Sekundärbatterie nach Anspruch 8, wobei das positive Elektrodenaktivmaterial von dem elektrisch leitenden Material bedeckt ist.

10. Natriumionen-Sekundärbatterie nach Anspruch 8 oder 9, wobei das elektrisch leitende Material ein Kohlenstoffmaterial ist, ausgewählt aus der Gruppe bestehend aus Graphit, Weichkohlenstoff, Hartkohlenstoff, Ruß, Ketjenschwarz, Acetylenruß, Graphit, aktiviertem Kohlenstoff, Kohlenstoffnanoröhren, Kohlenstofffasern und mesoporösem Kohlenstoff.

11. Natriumionen-Sekundärbatterie nach Anspruch 8, wobei das Bindemittel ein thermoplastisches Harz ist, ausgewählt aus der Gruppe bestehend aus Polyvinylidenfluorid (PVDF), Polytetrafluorethylen (PTFE), Ethylentetrafluorethylen (ETFE), Polyvinylacetat, Polyamid (PA), Polyimid (PI), Polyethylen und Polypropylen.

12. Natriumionen-Sekundärbatterie nach einem der Ansprüche 7 bis 11, wobei das negative Elektrodenaktivmaterial ein Kohlenstoffmaterial ist

## Revendications

1. Matériau actif d'électrode positive pour une batterie secondaire au sodium-ion, **caractérisé en ce qu'**il contient un sulfate représenté par:
NaₘMₙ(S0₄)₃
(où M représente un élément de métal de transition; m vaut 2 ± 2x (où x satisfait 0 ≤ x < 0,5); et
n est 2 ± y (où y satisfait à 0 < y < 0,5).

2. Matériau actif d'électrode positive pour une batterie secondaire au sodium-ion selon la revendication 1, dans lequel m est égal à 2 + 2x (où x satisfait 0 ≤ x < 0,5); et n vaut 2 - y (où y satisfait 0 ≤ y < 0,5).

3. Matériau actif d'électrode positive pour une batterie secondaire au sodium-ion selon les revendications 1 ou 2, dans lequel ledit sulfate a une structure cristalline dans laquelle MO₆ forme des octaèdres et présente des lignes de crête mutuellement partagées.

4. Matériau actif d'électrode positive pour une batterie secondaire au sodium-ion selon l'une quelconque des revendications 1 à 3, dans lequel ledit élément de métal de transition est un élément de métal de transition de période 4 choisi dans le groupe constitué de Sc, T, V, Cr, Mn, Fe, Co, Ni et Cu, ou bien un élément de métal de transition de période 5 choisi dans le groupe constitué de Y, Zr, Nb, Mo, Tc, Ru, Rh et Pd.

5. Matériau actif d'électrode positive pour une batterie secondaire au sodium-ion selon la revendication 4, dans lequel ledit élément de métal de transition est Fe.

6. Matériau actif d'électrode positive pour une batterie secondaire au sodium-ion selon l'une quelconque des revendications 1 à 5, dans lequel ledit sulfate est une particule ayant un diamètre de 5 µm ou moins.

7. Batterie secondaire au sodium-ion comprenant une électrode positive contenant le matériau actif d'électrode positive selon l'une quelconque des revendications 1 à 6, et une électrode négative contenant un matériau actif d'électrode négative capable de stocker et de libérer des ions sodium.

8. Batterie secondaire au sodium-ion selon la revendication 7, dans laquelle ladite électrode positive contient en outre un matériau électroconducteur ou un liant.

9. Batterie secondaire au sodium-ion selon la revendication 8, dans laquelle ledit matériau actif d'électrode positive est recouvert par ledit matériau électroconducteur.

10. Batterie secondaire au sodium-ion selon les revendications 8 ou 9, dans laquelle ledit matériau électroconducteur est un matériau carboné choisi dans le groupe consistant en graphite, carbone mou, carbone dur, noir de carbone, noir ketjen, noir d'acétylène, graphite, carbone activé, nanotubes de carbone, fibre de carbone et carbone mésoporeux.

11. Batterie secondaire au sodium-ion selon la revendication 8, dans laquelle ledit liant est une résine thermoplastique choisie dans le groupe constitué par le polyfluorure de vinylidène (PVDF), le polytétrafluoroéthylène (PTFE), l'éthylène tétrafluoroéthylène (ETFE), l'acétate de polyvinyle, le polyamide (PA), le polyimide (PI), le polyéthylène et le polypropylène.

12. Batterie secondaire au sodium-ion selon l'une quelconque des revendications 7 à 11, dans laquelle ledit matériau actif d'électrode négative est un matériau carboné, du sodium métallique, un alliage de sodium ou un oxyde de métal sodium.
